# EUROPÄISCHE PATENTSCHRIFT

(11) **EP 2 042 371 B1**
(45) Veröffentlichungstag und Bekanntmachung des Hinweises auf die Patenterteilung: **16.03.2011**
(21) Anmeldenummer: 07018791.9
(22) Anmeldetag: 25.09.2007
(51) Int. Cl.: B60P 1/60

(54) **Auslauftrichter für ein Silo eines Silofahrzeugs**
Outfeed hopper for the silo of a silo vehicle
Trémie de décharge pour un silo d'un véhicule à silo

(43) Veröffentlichungstag der Anmeldung: 01.04.2009
(73) Patentinhaber: Graf, Ernst, 78661 Dietingen (DE)
(72) Erfinder: Graf, Ernst, 78661 Dietingen (DE)
(74) Vertreter: Späth, Dieter

(56) Entgegenhaltungen:
- WO-A-01/25121
- DE-U1- 29 514 784
- FR-A- 1 415 624
- GB-A- 2 065 087
- JP-A- 11 180 557
- US-A- 2 665 035
- US-A- 3 236 422
- US-A- 3 829 022
- US-A- 4 383 766

## Beschreibung

Die Erfindung betrifft einen Auslauftrichter für ein Silo eines Silofahrzeugs mit den Merkmalen des Oberbegriffs des Anspruchs 1.

Bei einem Silofahrzeug handelt es sich um einen Lastkraftwagen oder dessen Anhänger, insbesondere ein Sattelauflieger, also den Anhänger einer Sattelzugmaschine, mit einem Silo als Aufbau. Das Silo ist ein Speicher für Schüttgüter, es ist auf Lastkraftwagen und deren Anhänger meist zylindrisch und liegend angeordnet. Auch die sog. Bananenform ist bekannt, bei der sich das Silo zu beiden Enden hin verjüngt, so dass das Schüttgut zur Mitte strömt. Zum Entladen weist das Silo einen oder mehrere Auslauftrichter an seiner Unterseite auf, der meist, allerdings nicht zwingend, kegelstumpfförmig ist. Das Silo wird auch als Kessel bezeichnet. Nach Öffnen des Auslauftrichters strömt das Schüttgut durch Schwerkraft aus dem Silo aus.

Stark zusammenhaftende Schüttgüter wie Mehl, Salz, Gips oder Zement strömen nicht von selbst aus dem geöffneten Auslasstrichter aus. Zum Entladen solcher Schüttgüter bzw. zur Beschleunigung der Entladung ist es bekannt, die Innenseite des oder der Auslauftrichter mit luftdurchlässigen Matten auszukleiden, die am äußeren/oberen und am inneren/unteren Rand abdichtend mit dem Auslauftrichter verbunden sind. Die Matten haben dieselbe Form wie der Auslauftrichter. Bei einem kegelstumpfförmigen Auslauftrichter sind auch die Matten kegelstumpfförmig. Der Auslauftrichter weist eine oder mehrere Druckluftzuführungen auf, durch die Druckluft zwischen den Auslauftrichter und die ihn auskleidenden Matten einblasbar ist. Die Druckluft strömt durch die Matten und löst das Schüttgut von ihnen und lockert das Schüttgut, so dass das Schüttgut durch Schwerkraft durch den Auslauftrichter aus dem Silo ausströmt.

Die Matten haben den Nachteil, dass ihre Reinigung zeitaufwändig ist. Sollen nacheinander verschiedene Schüttgüter transportiert werden, müssen die Matten üblicherweise ausgewaschen und anschließend getrocknet werden. Hierfür ist mit einem Zeitaufwand von zwei Stunden und mehr zu rechnen, bei einem Ausbau der Matten ist der Aufwand noch größer.

Die internationale Patentanmeldung WO 01/25 121 A1 offenbart ein Standsilo, in dessen unterem Bereich filterartige Segmente anstelle von Matten angeordnet sind. Die filterartigen Segmente haben die Form von Kegelstumpfsektoren, gemeinsam bilden sie einen kegelstumpfförmigen Trichter. Zum Leeren des Silos wird bei offenem Auslass Druckluft zwischen einen Boden des Silos und die filterartigen Segmente eingeblasen, die die filterartigen Segmente von unten nach oben durchströmt und dadurch an den Segmenten haftendes Schüttgut löst und das Schüttgut auflockert, so dass das Schüttgut durch Schwerkraft aus dem Silo ausströmt.

Das US-Patent 3,829,022 offenbart ein trichterförmiges Behältnis für Schüttgüter, das rasterartig verteilt angeordnete siebartige Elemente an seiner Innenseite aufweist. Zu jedem siebartigen Segment führt eine Druckluftleitung um das Schüttgut beim Ausströmen auflockern zu können.

Das US-Patent 3,236,422 offenbart ein Silo, in dessen Auslauftrichter filterartige Segmente angeordnet sind, die die Form von Kegelstumpfsektoren aufweisen und gemeinsam einen kegelstumpfförmigen Trichter bilden. Die Segmente weisen eine unten und außen geschlossene Wanne auf, deren Oberseite von dem filterartigen Segment gebildet wird, so dass Druckluft in die Wanne der Segmente eingeblasen werden kann, um anhaftendes Schüttgut zu lösen und das Schüttgut beim Ausströmen aufzulockern.

Die japanische Patentanmeldung JP 11 180 557 A offenbart ein Fahrzeugsilo mit Trichtern, die ebenfalls mit filterartigen Segmenten an ihrer Innenseite ausgekleidet sind, die die Form von Kegelstumpfsektoren bilden und gemeinsam einen kegelstumpfförmigen Trichter bilden. Auf einer Ober- bzw. Innenseite der filterartigen Segmente liegt eine Matte auf. Die Segmente und die Matte sind am Außenumfang durch einen umlaufenden, eine nach innen offene, V-förmige und umlaufende Nut und einen innen einliegenden Spannring gehalten. Der Trichter hat keinen Auslass, er ist kein Auslauftrichter. Eine Leerung des Silos erfolgt durch Absaugen mit einem Krümmer, der in den Trichter als tiefsten Punkt des Silos ragt.

Das französische Patent FR 1 415 624 offenbart ein Fahrzeugsilo mit Auslauftrichtern, an deren Innenseiten rasterartig verteilt siebartige Segmente angeordnet sind, durch die Druckluft von außen eingeblasen werden kann, um das Schüttgut beim Ausströmen zu lockern.

Aufgabe der Erfindung ist einen Auslauftrichter für ein Silo eines Silofahrzeugs mit filterartigen Segmenten zum Einblasen vorn Druckluft vorzuschlagen, dessen filterartige Segmente gut aus- und einbaubar sind.

Diese Aufgabe wird erfindungsgemäß durch die Merkmale des Anspruchs 1 gelöst. Gemäß der Erfindung weisen der oder die Auslauftrichter des Silos des Silofahrzeugs filterartige Segmente auf, die lösbar an einer Innenseite des Auslauftrichters angebracht sind. Die einzelnen Segmente erstrecken sich über einen Teil des Umfangs des Auslauftrichters, beispielsweise über 90 Grad. Zusammen erstrecken sich die Segmente eines Auslauftrichters vorzugsweise über dessen gesamten Umfang, wobei sie an ihren einander zugewandten Rändern unterbrochen sein können. Die Segmente sind filterartig, womit gemeint ist, dass Druckluft durchtreten kann, nicht jedoch das Schüttgut. Druckluft aus der oder den Druckluftzuführungen gelangt zwischen den Auslauftrichter und die filterartigen Segmente, durchströmt die filterartigen Segmente und löst dabei haftendes Schüttgut und lockert es auf, so dass es durch Schwerkraft aus dem Auslauftrichter austritt.

Zum lösbaren Anbringen der Segmente an der Innenseite des Auslauftrichters sieht die Erfindung Halter vor, die die Segmente auf ihrer dem Auslauftrichter abgewandten Innenseite übergreifen und lösbar gegen die Innenseite des Auslauftrichters spannen. Die Innenseiten der Segmente sind dem Inneren des Auslauftrichters bzw. des Silos zugewandt. Die Außenseite der Segmente sind dem zufolge der Innenseite des Auslauftrichters zugewandt. Die Halter sind leistenförmig und erstrecken sich entlang eines Randes der Segmente, an denen die Halter die Segmente übergreifen und gegen die Innenseite des Auslauftrichters drücken. Zum lösbaren Spannen der Segmente gegen die Innenseite des Auslauftrichters können die Halter beispielsweise mit dem Auslauftrichter verschraubt oder mit sonstigen Befestigungs- oder Schnellspannmitteln lösbar befestigt sein.

Vorteil der Erfindung ist eine einfache Aus- und Einbaubarkeit sowie Handhabbarkeit der filterartigen Segmente.

In bevorzugter Ausgestaltung der Erfindung sind die Segmente formwahrend. Im Unterschied zu den bekannten Matten halten die Segmente der Auslauftrichter des erfindungsgemäßen Silofahrzeugs ihre Form bei, wenn sie ausgebaut werden. Auch dadurch ist ihre Handhabung beim Ein- und Ausbau vereinfacht. Aufgrund der Unterteilung in Segmente sind diese trotz ihres Formwahrens durch Ladeluken auf der Oberseite des Silos aus- und einbringbar.

Eine Ausgestaltung der Erfindung sieht vor, dass die Segmente formwahrende Rahmen aufweisen, die Filtermatten halten. Die Filtermatten sind beispielsweise Gewebe, Gitter, Siebe, vorzugsweise aus nicht rostendem Werkstoff, beispielsweise aus Kunststoff oder Metall. Die Filtermatten können beispielsweise Gewebe aus nicht rostendem Stahl, aus Kupfer oder Messing sein. Die Bezeichnung als Filtermatten ist nicht anhand einer Filterfunktion, sondern anhand der Funktion, für das im Silo enthaltene Schüttgut undurchlässig und luftdurchlässig zu sein, zu verstehen und auszulegen. Bei grobkörnigem Schüttgut können die Segmente beispielsweise auch Lochbleche sein oder aufweisen. Im Unterschied zu den bekannten Matten können die Segmente aus schnell trocknendem Material bestehen, wie gesagt, beispielsweise aus Drahtgewebe.

Im Falle der Verschraubung der Halter mit dem Auslauftrichter sieht eine Ausgestaltung der Erfindung vor, dass die Halter durch Federelemente von der Innenseite des Auslauftrichters abgedrückt werden. Die Federelemente vereinfachen den Aus- und Einbau der filterartigen Segmente. Zum Ausbau werden die Schrauben der Halter gelockert, jedoch nicht vollständig gelöst. Die Federelemente drücken die Halter von der Innenseite des Auslauftrichters ab, so dass die Segmente entfernt werden können. Zum Einbau werden die Segmente auf die Innenseite des Auslauftrichters gelegt und dabei unter die Halter geschoben, die von den Federelementen angehoben werden. Abschließend werden die Schrauben der Halter festgezogen und dadurch die Segmente gegen die Innenseite des Auslauftrichters gespannt.

Eine Weiterbildung der Erfindung sieht vor, dass die Halter einen Auslaufstutzen des Auslauftrichters halten. Der Auslaufstutzen wird auch als Innenring bezeichnet, er ist eine Art rohrförmiges, in die Mündung des Auslauftrichters eingesetztes und den eigentlichen Auslass bildendes Teil. An den Auslaufstutzen kann beispielsweise eine Rohrleitung oder ein Schlauch angeschlossen werden.

Eine Ausgestaltung der Erfindung sieht vor, dass die Segmente an ihren Rändern, insbesondere den Außen- und/oder Innenrändern dichtend am Auslauftrichter oder dem Auslaufstutzen anliegen, damit die zwischen den Auslauftrichter und die Segmente eingeblasene Druckluft nicht an den Rändern der Segmente entweicht, sondern, wie vorgesehen, durch die filterartigen Segmente selbst durchtritt. Eine absolute Abdichtung ist nicht zwingend erforderlich. Allerdings sieht eine Weiterbildung der Erfindung eine oder mehrere Lamellendichtungen vor, deren Dichtlippe durch Beaufschlagung mit Druckluft in dichtende Anlage gegen die Innenseite des Auslauftrichters bzw. Auslaufstutzens beaufschlagt wird, um die Dichtfunktion zu verbessern.

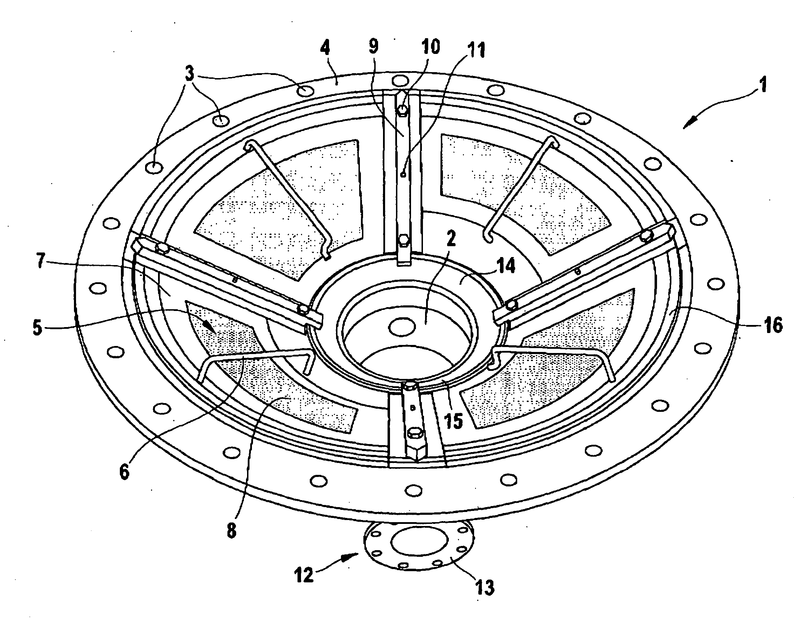

Die Erfindung wird nachfolgend anhand eines in der Zeichnung dargestellten Ausführungsbeispiels erläutert. Die einzige Figur zeigt einen erfindungsgemäßen Auslauftrichter in perspektivischer Darstellung mit Blick auf eine Innenseite.

Der in der Zeichnung dargestellte, erfindungsgemäße Auslauftrichter 1 weist die Form eines Kegelstumpfs mit einem Austrittsloch 2 auf. Ein äußerer Rand des Auslauftrichters 1 weist einen mit Durchstecklöchern 3 versehenen Schraubflansch 4 zur Befestigung des Auslauftrichters 1 an einem nicht dargestellten Silo eines Silofahrzeugs auf. Das Silo ist Aufbau beispielsweise eines Sattelaufliegers, eines anderen Anhängers eines Lastkraftwagens oder eines Lastkraftwagens. Grundsätzlich kann das Silo auch auf anderen Fahrzeugen, beispielsweise einem Eisenbahnwagen angebracht oder stationär sein.

Auf einer Innenseite des Auslauftrichters 1 liegen vier filterartige Segmente 5 auf, die sich jeweils über etwa 90 Grad im Umfangsrichtung erstrecken. Die Anzahl von vier Segmenten 5 ist nicht zwingend, der Auslauftrichter 1 kann auch mehr als vier, evtl. auch nur drei oder sogar nur zwei filterartige Segmente 5 aufweisen ( nicht dargestellt). Die filterartigen Segmente 5 sind kegelförmig entsprechend dem Auslauftrichter 1. Die filterartigen Segmente 5 liegen nicht unmittelbar auf der Innenseite des Auslauftrichters 1 auf, sondern es besteht ein schmaler Zwischenraum zwischen den Segmenten 5 und der Innenseite des Auslauftrichters 1. In den Zwischenraum ist Druckluft durch eine oder vorzugsweise mehrere Druckluftmündungen einblasbar, die auf der Innenseite des Auslauftrichters 1 münden. Die Druckluftzuführungen, beispielsweise Druckluftleitungen, befinden sich auf der Außen- oder Unterseite des Auslauftrichters 1 und sind deswegen in der Zeichnung nicht sichtbar. Jedes filterartige Segment 5 weist einen Handgriff 6 zu seiner Handhabung auf.

Die filterartigen Segmente 5 weisen einen entlang ihrer Ränder umlaufenden Rahmen 7 auf, in dem ein nachfolgend als Filtermatte 8 bezeichnetes Gewebe befestigt ist. Im dargestellten Ausführungsbeispiel der Erfindung besteht das die Filtermatte 8 bildende Gewebe aus Metalldraht aus nicht rostenden Stahldrähten, die Erfindung ist allerdings nicht auf dieses Material beschränkt. Zweck der Filtermatte 8 ist nicht eine Filterung, sondern die Möglichkeit eines Durchtritts von Druckluft und zugleich die Verhinderung des Durchtritts von Schüttgut aus dem nicht dargestellten Silo. Bei grobkörnigem Schüttgut ist auch die Verwendung von Lochblech oder dgl. für die filterartigen Segmente 5 möglich (nicht dargestellt). Unter den Filtermatten 8 sind Drahtgitter, ebenfalls aus nicht rostenden Stahldrähten, als Unterlagen der Filtermatten 8 in den Rahmen 7 angebracht. Die Rahmen 7 bestehen ebenfalls aus nicht rostendem Stahl. Die Materialwahl ist, wie gesagt, nicht zwingend.

In Abständen von 90 Grad in Umfangsrichtung sind vier Rippen an der Innenseite des Auslauftrichters 1 angebracht. Die Rippen können beispielsweise mit dem Auslauftrichter 1 verschraubt oder verschweißt sein. Die Rippen verlaufen in Richtung gedachter Mantellinien des kegelstumpfförmigen Auslauftrichters 1. Die Rippen sind von Haltern 9 überdeckt und deswegen in der Zeichnung nicht sichtbar. Die Halter 9 sind Tiefziehteile aus Blech mit der Form von U-Profilen, deren Ränder flanschartig zur Seite abstehend ausgebildet sind. Die Rahmen 7 der filterartigen Segmente 5 reichen bis an die von den Haltern 9 überdeckten Rippen des Auslauftrichters 1 heran. Die Ränder der Halter 9 übergreifen die ihnen zugewandten Ränder der Rahmen 7 der filterartigen Segmente 5. Die Halter 9 sind mit Schrauben 10 mit den nicht sichtbaren Rippen des Auslauftrichters 1 verschraubt und halten die filterartigen Segmente 5 auf der Innenseite des Auslauftrichters 1. Jeweils ein Positionierstift 11 in der Mitte der Rippen des Auslauftrichters 1 positioniert die Halter 9. Ein oder mehrere zwischen den Haltern 9 und den Rippen des Auslauftrichters 1 angeordnete Federelemente drücken die Halter 9 von den Rippen ab. Die Federelemente sind von den Haltern 9 abgedeckt und deswegen nicht sichtbar. Die Federelemente können beispielsweise Blattfedern oder Schraubendruckfedern sein.

Im Austrittsloch 2 des Auslauftrichters 1 ist ein Auslaufstutzen 12 angebracht, der teilweise auch als Innenring bezeichnet wird. Im dargestellten Ausführungsbeispiel weist der Auslaufstutzen 12 einen 90 Grad-Rohrkrümmer auf mit einem Schraubflansch 13 zum Anschluss einer nicht dargestellten Rohrleitung zur Entladung des Silos. An seinem trichterseitigen Ende weist der Auslaufstutzen 12 einen an die Form des Auslauftrichters 1 angepassten kegelstumpfförmigen Flansch 14 auf, der sich auf der Innenseite des Auslauftrichters 1 befindet. Der Flansch 14 des Auslaufstutzens 12 übergreift Innenränder der filterartigen Segmente 5. Die Halter 9 übergreifen den Flansch 14 des Auslaufstutzens 12 mit ihren inneren Enden, so dass der Auslaufstutzen 12 im Austrittsloch 2 des Auslauftrichters 1 befestigt ist.

An seinem Außenrand weist der Flansch 14 des Auslaufstutzens 12 eine Dichtung 15 auf, mit der er dichtend auf den inneren Rändern der filterartigen Segmente 5 aufliegt. Äußere Ränder der filterartigen Segmente 5 weisen ebenfalls eine Dichtung 16 auf, mit der sie dichtend an der Innenseite des Auslauftrichters 1 anliegen. Dadurch wird ein Druckluftaustritt am inneren und am äußeren Rand der filterartigen Segmente 5 vermieden. Die Dichtungen 15, 16 sind Lamellendichtungen, deren Dichtlippen bei Druckluftbeaufschlagung gegen die inneren Ränder der filterartigen Segmente 5 bzw. die Innenseite des Auslauftrichters 1 beaufschlagt werden, wodurch eine gute Abdichtung insbesondere bei Druckluftbeaufschlagung erzielt wird. Es kommen allerdings auch andere Dichtungen als Lamellendichtungen in Betracht.

Zum Ausbau der filterartigen Segmente 5 werden die Schrauben 10 der Halter 9 gelockert, allerdings nicht vollständig ausgeschraubt. Die nicht sichtbaren Federelemente drücken die Halter 9 von der Innenseite des Auslauftrichters 1 und von den Rändern der filterartigen Segmente 5 ab, so dass die filterartigen Segmente 5 ein kurzes Stück nach außen oben geschoben werden können, bis ihre Ränder von den Haltern 9 frei kommen. Anschließend können die filterartigen Segmente 5 entfernt werden. Der Einbau der filterartigen Segmente 5 erfolgt in umgekehrter Reihenfolge. Die filterartigen Segmente 5 lassen sich dadurch einfach reinigen oder austauschen. Die aus Drahtgewebe bestehenden Filtermatten 8 trocknen nach einer Reinigung mit Wasser oder einem anderen flüssigen Reinigungsmittel schnell. Ein Ausbau der filterartigen Segmente 5 zur Reinigung ist nicht in jedem Fall erforderlich. Der Ein- und Ausbau der filterartigen Segmente 5 ist einfach und geht schnell vonstatten.

Zum Entleeren des nicht dargestellten Silos wird nach Öffnen des Austrittslochs 2 des Auslauftrichters 1 Druckluft durch die nicht sichtbaren Druckluftmündungen in den Zwischenraum zwischen den filterartigen Segmenten 5 und dem Auslauftrichter 1 eingeblasen. Die Druckluft tritt durch die Filtermatten 8 und löst dabei das Schüttgut und lockert es auf. Das Schüttgut strömt durch Schwerkraft durch das Austrittsloch 2 des Auslauftrichters 1 in den Auslaufstutzen 12 aus. Das Einblasen der Druckluft durch die Filtermatten 8 der filterartigen Segmente 5 beschleunigt die Leerung des Silos. Bei zusammenhaftendem Schüttgut wie beispielsweise Mehl, Salz, Zement oder Gips ermöglicht erst das Einblasen von Druckluft die schwerkraftbedingte Entleerung des Silos und hält sie in Gang. Ohne das Einblasen von Druckluft würde sich das Silo bei stark zusammenhaftenden Schüttgütern nicht leeren.

## Patentansprüche

1. Auslauftrichter für ein Silo eines Silofahrzeugs, mit filterartigen Segmenten (5), die auf der Innenseite des Auslauftrichters (1) angebracht sind, und mit einer Druckluftzuführung, mit der Druckluft zwischen die filterartigen Segmente (5) und die Innenseite des Auslauftrichters (1) einblasbar ist, **dadurch gekennzeichnet, dass** die filterartigen Segmente (5) lösbar auf der Innenseite des Auslauftrichters (1) angebracht sind, und dass der Auslauftrichter (1) leistenförmige Halter (9) aufweist, die sich entlang eines Randes der Segmente (5) erstrecken, an denen die Halter (9) die Segmente (5) auf einer dem Auslauftrichter (1) abgewandten Innenseite übergreifen und die Segmente (5) lösbar gegen die Innenseite des Auslauftrichters (1) spannen.

2. Auslauftrichter nach Anspruch 1, **dadurch gekennzeichnet, dass** die Segmente (5) formwahrend sind.

3. Auslauftrichter nach Anspruch 1 oder 2, **dadurch gekennzeichnet, dass** die Segmente (5) Rahmen (7) aufweisen, die Filtermatten (8) halten.

4. Auslauftrichter nach Anspruch 1 **dadurch gekennzeichnet, dass** die Halter (9) mit dem Auslauftrichter (1) verschraubt sind und durch Federelemente von der Innenseite des Auslauftrichters (1) abgedrückt werden.

5. Auslauftrichter nach Anspruch 1 oder 4, **dadurch gekennzeichnet, dass** die Halter (9) einen Auslaufstutzen (12) übergreifen.

6. Auslauftrichter nach einem der vorhergehenden Ansprüche, **dadurch gekennzeichnet, dass** die Segmente (5) an ihren Außenrändern dichtend am Auslauftrichter (1) anliegen und/oder an ihren Innenrändern dichtend am Auslauftrichter (1) oder einem Auslaufstutzen (12) anliegen.

7. Auslauftrichter nach einem der vorhergehenden Ansprüche, **dadurch gekennzeichnet, dass** die Segmente (5) eine Lamellendichtung (15, 16) aufweisen, die durch Beaufschlagen mit Druckluft aus der Druckluftzufuhr in Anlage an dem Auslauftrichter (1) beaufschlagt werden.

## Claims

1. An outfeed hopper for a silo of the silo vehicle, with filter-like segments (5), which are attached to the inside of the outfeed hopper (1), and with a compressed air supply such that compressed air can be blown between the filter-like segments (5) and the inside of the outfeed hopper (1), **characterised in that** the filter-like segments (5) are attached to the inside of the outfeed hopper (1) in a detachable manner and the outfeed hopper (1) has strip-shaped holders (9) along the edge of the segments (5), in which the holders (9) overlap on an inside facing away from the outfeed hopper (1) and which tension the segments (5) in a detachable manner against the inside of the outfeed hopper (1).

2. The outfeed hopper according to claim 1 **characterised in that** the segments (5) are shape preserving.

3. The outfeed hopper according to claim 1 or 2, **characterised in that** the segments (5) have frames (7), which hold filter mats (8).

4. The outfeed hopper according to claim 1, **characterised in that** the holders (9) are screwed to the outfeed hopper (1) and are pushed away from the inside of the outfeed hopper (1) by means of spring elements.

5. The outfeed hopper according to claim 1 or 4, **characterised in that** the holders (9) overlap a discharge port (12).

6. The outfeed hopper according to one of the preceding claims, **characterised in that** the segments (5) are fitted to the outfeed hopper (1) in a sealing way at their outer edges and/or fitted to the outfeed hopper (1) in a sealing way at their inner edges or to a discharge port (12).

7. The outfeed hopper according to one of the preceding claims, **characterised in that** the segments (5) having a disk seal (15, 16), which is pressed against the outfeed hopper (1) by means of compressed air from the compressed air supply of the plant.

## Revendications

1. Trémie de décharge destinée au silo d'un véhicule à silo, comprenant des segments (5) du type filtres implantés sur la face intérieure de ladite trémie de décharge (1), et une arrivée d'air comprimé par laquelle de l'air comprimé peut être insufflé entre lesdits segments (5) du type filtres, et ladite face intérieure de ladite trémie de décharge (1), **caractérisée par le fait que** les segments (5) du type filtres sont installés amoviblement sur la face intérieure de la trémie de décharge (1) ; et **par le fait que** ladite trémie de décharge (1) comporte des pièces de retenue (9) en forme de réglettes, s'étendant le long d'un bord des segments (5) sur lequel lesdites pièces de retenue (9) coiffent lesdits segments (5) sur une face interne tournée à l'opposé de ladite trémie de décharge (1), et tendent amoviblement lesdits segments (5) contre la face intérieure de ladite trémie de décharge (1).

2. Trémie de décharge selon la revendication 1, **caractérisée par le fait que** les segments (5) conservent leur forme.

3. Trémie de décharge selon la revendication 1 ou 2, **caractérisée par le fait que** les segments (5) présentent des cadres (7) retenant des mats de filtration (8).

4. Trémie de décharge selon la revendication 1, **caractérisée par le fait que** les pièces de retenue (9) sont boulonnées sur la trémie de décharge (1) et sont repoussées, par des éléments élastiques, à l'écart de la face intérieure de ladite trémie de décharge (1).

5. Trémie de décharge selon la revendication 1 ou 4, **caractérisée par le fait que** les pièces de retenue (9) coiffent un manchon de décharge (12).

6. Trémie de décharge selon l'une des revendications précédentes, **caractérisée par le fait que** les segments (5) portent contre la trémie de décharge (1) par leurs bords extérieurs, avec effet d'étanchement ; et/ou portent contre ladite trémie de décharge (1) ou contre un manchon de décharge (12), par leurs bords intérieurs, avec effet d'étanchement.

7. Trémie de décharge selon l'une des revendications précédentes, **caractérisée par le fait que** les segments (5) comportent une garniture d'étanchement (15, 16) à lamelles sollicitée, par action d'air comprimé provenant de l'arrivée d'air comprimé, pour venir en applique contre ladite trémie de décharge (1).
